# EUROPEAN PATENT APPLICATION

(11) **EP 3 816 545 A1**
(43) Date of publication of application: **05.05.2021**
(21) Application number: 19825461.7
(22) Date of filing: 20.02.2019
(51) Int. Cl.: F25B 47/02, F25B 1/00, F25B 1/10

(54) **REFRIGERATION CYCLE DEVICE AND LIQUID HEATING DEVICE COMPRISING SAME**

(30) Priority: 29.06.2018 JP 2018124065
(71) Applicant: Panasonic Intellectual Property Management Co., Ltd., Osaka 540-6207 (JP)
(72) Inventor: YAMAOKA, Yuki, Osaka 540-6207 (JP); AOYAMA, Shigeo, Osaka 540-6207 (JP); NAKATANI, Kazuhito, Osaka 540-6207 (JP); MACHIDA, Kazuhiko, Osaka 540-6207 (JP); MORIWAKI, Shunji, Osaka 540-6207 (JP); KOISHIHARA,, Osaka 540-6207 (JP); HSU, Chihsuan, Osaka 540-6207 (JP); IMAGAWA, Tsuneko, Osaka 540-6207 (JP)
(74) Representative: Eisenführ Speiser
(86) International application number: PCT/JP2019/006195
(87) International publication number: WO 2020/003590

(57) **Abstract**

The present invention provides a refrigeration cycle device and a liquid heating device having the same including a heating operation mode for heating usage-side heat medium in a usage-side heat exchanger 22 by refrigerant discharged from a compression rotation element 21b of a compression mechanism 21, and a defrosting operation mode for defrosting a heat source-side heat exchanger 24 by refrigerant discharged from the compression rotation element 21b, in which a control device 4 adjusts an opening degree of a first expansion device 23 and an opening degree of a second expansion device 31, and during execution of the defrosting operation mode, a flow rate of refrigerant flowing through the first expansion device 23 is made larger than a flow rate of refrigerant flowing through the second expansion device 31, and even when a heating operation in the usage-side heat exchanger 22 is executed after execution of the defrosting operation of the heat source-side heat exchanger 24 is completed, it is possible to suppress deterioration of heating ability when the heating operation in the usage-side heat exchanger 22 is carried out.

## Description

### [TECHNICAL FIELD]

The present invention relates to a refrigeration cycle device and a liquid heating device having the same.

### [BACKGROUND TECHNIQUE]

As refrigeration cycle devices of this kind, there is conventionally disclosed a refrigeration cycle device including a two-stage compression mechanism in which a portion of refrigerant is expanded from a downstream side of a usage-side heat exchanger, and the refrigeration cycle device bypasses intermediate refrigerant in the middle of a compressing operation of the two-stage compression mechanism (see patent document 1 for example).

Fig. 3 shows the conventional refrigeration cycle device described in patent document 1.

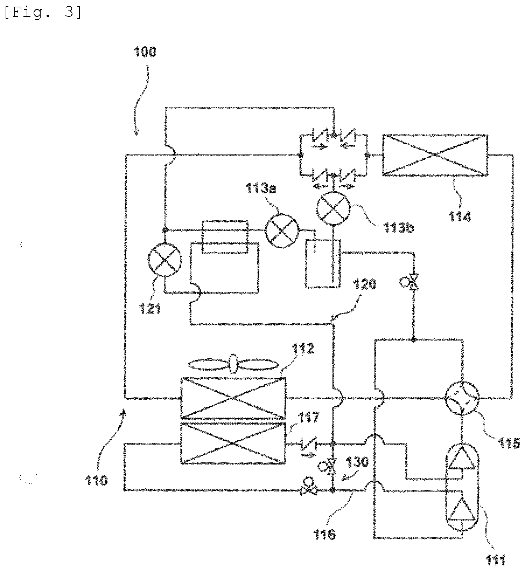

As shown in Fig. 3, the refrigeration cycle device 100 includes a refrigerant circuit 110 through which refrigerant circulates, and a rear stage-side injection pipe 120. The refrigerant circuit 110 is formed by annularly connecting a compression mechanism 111 having a plurality of compression rotation elements which are serially connected to one another, a heat source-side heat exchanger 112, expansion mechanisms 113a and 113b and a usage-side heat exchanger 114 through a pipe. The refrigerant circuit 110 is composed of a switching mechanism 115 for switching between a heating operation and a cooling operation.

Further, the refrigeration cycle device 100 includes an intermediate refrigerant pipe 116 for sucking refrigerant discharged from a front stage-side compression rotation element into a rear stage-side compression rotation element. The intermediate refrigerant pipe 116 is provided with an intermediate cooler 117 which functions as a cooler of refrigerant discharged from the front stage-side compression rotation element and sucked into the rear stage-side compression rotation element. The intermediate refrigerant pipe 116 is provided with an intermediate cooler bypass pipe 130 which bypasses the intermediate cooler 117.

The rear stage-side injection pipe 120 branches off from the refrigerant circuit 110 between the heat source-side heat exchanger 112 and the usage-side heat exchanger 114. The rear stage-side injection pipe 120 is in communication with the refrigerant circuit 110 such that branched refrigerant returns to the rear stage-side compression rotation element of the compression mechanism 111. The injection pipe 120 is provided with a rear stage-side injection valve 121 whose opening degree can be controlled.

The refrigeration cycle device 100 switches the switching mechanism 115 into the cooling operation state. According to this, when an inverse cycle defrosting operation for defrosting the heat source-side heat exchanger 112 is carried out, refrigerant is made to flow through the heat source-side heat exchanger 112, the intermediate cooler 117 and the rear stage-side injection pipe 120 and after it is detected that the defrosting operation of the intermediate cooler 117 is completed, the intermediate cooler bypass pipe 130 is used so that the refrigerant does not through the intermediate cooler 117, and control is performed such that the opening degree of the rear stage-side injection valve 121 is increased.

### [PRIOR ART DOCUMENT]

### [Patent Document]

[Patent Document1] Japanese Patent Application Laid-open No.2009-133581

### [SUMMARY OF THE INVENTION]

### [PROBLEM TO BE SOLVED BY THE INVENTION]

In the conventional refrigeration cycle device, however, although it is possible to suppress the performance deterioration of the device which is caused by defrosting ability, since low pressure and low temperature refrigerant circulates through the usage-side heat exchanger during the defrosting operation of the heat source-side heat exchanger, there is a problem that the usage-side heat exchanger is cooled and rise of the heating ability at the time of the heating operation in the usage-side heat exchanger after the defrosting operation of the heat source-side heat exchanger is completed becomes slow.

The present invention has been accomplished to solve the conventional problem, and it is an object of the invention to provide a refrigeration cycle device and a liquid heating device having the same capable of suppressing deterioration of the heating ability at the time of the heating operation in the usage-side heat exchanger also when the heating operation in the usage-side heat exchanger is executed after the defrosting operation of the heat source-side heat exchanger is completed.

### [MEANS FOR SOLVING THE PROBLEM]

To solve the conventional problem, the present invention provides a refrigeration cycle device including: a main refrigerant circuit formed by sequentially connecting, through a pipe, a compression mechanism composed of a compression rotation element, a usage-side heat exchanger for heating usage-side heat medium by refrigerant discharged from the compression rotation element, an intermediate heat exchanger, a first expansion device, and a heat source-side heat exchanger; a bypass refrigerant circuit branches off from the pipe between the usage-side heat exchanger and the first expansion device, in which branched refrigerant is decompressed by a second expansion device and thereafter, heat of the refrigerant is exchanged with that of the refrigerant flowing through the main refrigerant circuit by the intermediate heat exchanger, and the refrigerant joins up with the refrigerant which is in middle of a compression operation of the compression rotation element; and a control device, wherein the refrigeration cycle device includes a heating operation mode for heating the usage-side heat medium in the usage-side heat exchanger by the refrigerant discharged from the compression rotation element, and a defrosting operation mode for defrosting the heat source-side heat exchanger by the refrigerant discharged from the compression rotation element, the control device adjusts an opening degree of the first expansion device and an opening degree of the second expansion device, and while the defrosting operation mode is executed, a flow rate of refrigerant flowing through the first expansion device is made larger than a flow rate of refrigerant flowing through the second expansion device.

According to this, refrigerant discharged from the compression rotation element circulates through the main refrigerant circuit and in the defrosting operation mode for defrosting the heat source-side heat exchanger, a flow rate of refrigerant which flows through the first expansion device is larger than a flow rate of refrigerant which flows through the second expansion device during execution of the defrosting operation mode. Therefore, since the refrigerant which passes through the usage-side heat exchanger is not brought into a low temperature and low pressure state, it is possible to suppress temperature drop of the usage-side heat exchanger. As a result, it is possible to provide a refrigeration cycle device capable of suppressing deterioration of the heating ability at the time of the heating operation in the usage-side heat exchanger also when the heating operation in the usage-side heat exchanger after execution of the defrosting operation of the heat source-side heat exchanger is completed is executed.

During execution of the defrosting operation mode, since the flow rate of refrigerant flowing through the first expansion device is larger than the flow rate of refrigerant flowing through the second expansion device, an amount of refrigerant passing through the usage-side heat exchanger is also increased, heat possessed by the usage-side heat medium which is stored in the usage-side heat exchanger can also be utilized for defrosting the heat source-side heat exchanger. Therefore, it is possible to enhance the defrosting ability in the defrosting operation mode.

### [EFFECT OF THE INVENTION]

According to the present invention, it is possible to provide a refrigeration cycle device and a liquid heating device having the same capable of suppressing the deterioration of the heating ability at the time of the heating operation in the usage-side heat exchanger also when the heating operation in the usage-side heat exchanger is executed after execution of the defrosting operation of the heat source-side heat exchanger is completed.

### [BRIEF DESCRIPTION OF THE DRAWINGS]

Fig. 1 is a block diagram of a liquid heating device in a an embodiment of the present invention;
Fig. 2 is a flowchart of control of execution of a defrosting operation mode of a refrigeration cycle device; and
Fig. 3 is a block diagram of a conventional refrigeration cycle device.

### [MODE FOR CARRYING OUT THE INVENTION]

A first invention provides a refrigeration cycle device including: a main refrigerant circuit formed by sequentially connecting, through a pipe, a compression mechanism composed of a compression rotation element, a usage-side heat exchanger for heating usage-side heat medium by refrigerant discharged from the compression rotation element, an intermediate heat exchanger, a first expansion device, and a heat source-side heat exchanger; a bypass refrigerant circuit branches off from the pipe between the usage-side heat exchanger and the first expansion device, in which branched refrigerant is decompressed by a second expansion device and thereafter, heat of the refrigerant is exchanged with that of the refrigerant flowing through the main refrigerant circuit by the intermediate heat exchanger,and the refrigerant joins up with the refrigerant which is in middle of a compression operation of the compression rotation element; and a control device, wherein the refrigeration cycle device includes a heating operation mode for heating the usage-side heat medium in the usage-side heat exchanger by the refrigerant discharged from the compression rotation element, and a defrosting operation mode for defrosting the heat source-side heat exchanger by the refrigerant discharged from the compression rotation element, the control device adjusts an opening degree of the first expansion device and an opening degree of the second expansion device, and while the defrosting operation mode is executed, a flow rate of refrigerant flowing through the first expansion device is made larger than a flow rate of refrigerant flowing through the second expansion device.

According to this, refrigerant discharged from the compression rotation element circulates through the main refrigerant circuit and in the defrosting operation mode for defrosting the heat source-side heat exchanger, a flow rate of refrigerant which flows through the first expansion device is larger than a flow rate of refrigerant which flows through the second expansion device during execution of the defrosting operation mode. Therefore, since the refrigerant which passes through the usage-side heat exchanger is not brought into a low temperature and low pressure state, it is possible to suppress temperature drop of the usage-side heat exchanger. As a result, the heating ability can swiftly be enhanced, and it is possible to provide a refrigeration cycle device capable of suppressing deterioration of the heating ability at the time of the heating operation in the usage-side heat exchanger also when the heating operation in the usage-side heat exchanger after execution of the defrosting operation of the heat source-side heat exchanger is completed is executed.

During execution of the defrosting operation mode, since the flow rate of refrigerant flowing through the first expansion device is larger than the flow rate of refrigerant flowing through the second expansion device, an amount of refrigerant passing through the usage-side heat exchanger is also increased, heat possessed by the usage-side heat medium which is stored in the usage-side heat exchanger can also be utilized for defrosting the heat source-side heat exchanger. Therefore, it is possible to enhance the defrosting ability in the defrosting operation mode.

According to a second invention, in the first invention, the control device makes the first expansion device operate faster than the second expansion device, and the control device sets the opening degrees of the expansion devices to such values that the flow rate of the refrigerant flowing through the first expansion device becomes larger than the flow rate of the refrigerant flowing through the second expansion device.

According to this, the first expansion device operates its opening degree swiftly than the opening of the second expansion device such that the flow rate of refrigerant flowing through the first expansion device becomes larger than the flow rate of refrigerant flowing through the second expansion device. Hence, it is possible to reduce a difference between high pressure and low pressure of refrigerant of the main refrigerant circuit. In the defrosting operation mode, it is possible to swiftly increase the flow rate of refrigerant discharged from the compression rotation element which can be supplied to the heat source-side heat exchanger.

According to a third invention, in any one of the first and second inventions, in the defrosting operation mode, the refrigerant discharged from the compression rotation element flows through the usage-side heat exchanger, the first expansion device and the heat source-side heat exchanger in this order.

According to this, also during execution of the defrosting operation mode, high temperature discharged refrigerant flows through the usage-side heat exchanger. Therefore, temperature drop of the usage-side heat exchanger is suppressed and in the heating operation mode which is executed after the execution of the defrosting operation mode is completed, temperature rise of the usage-side heat exchanger can be promoted, and also in the heating operation mode after the defrosting operation mode is executed under a high humidity outside air temperature condition in which a frosting amount is large, it is possible to swiftly enhance the heating ability.

According to a fourth invention, in any one of the first to third inventions, carbon dioxide is used as the refrigerant.

According to this, in the usage-side heat exchanger, it is possible to increase the temperature of the usage-side heat exchanger to a high value when the usage-side heat medium is heated by refrigerant.

A fifth invention provides liquid heating device including the refrigeration cycle device according to any one of the first to fourth inventions, and a usage-side heat medium circuit through which the usage-side heat medium circulates by a conveying device.

According to this, it is possible to provide a liquid heating device capable of increasing the temperature of the usage-side heat medium to a high value when the usage-side heat medium is heated by refrigerant.

An embodiment of the present invention will be described below with reference to the drawings. The invention is not limited to the embodiment.

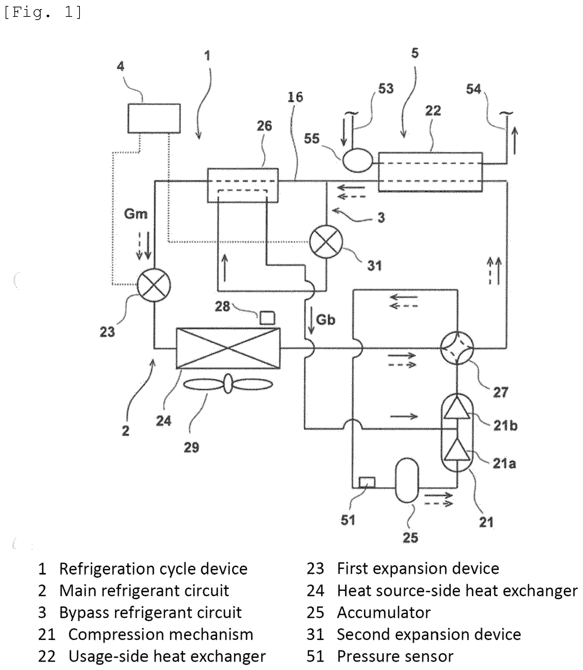

Fig. 1 is a block diagram of a liquid heating device in an embodiment of the present invention. The liquid heating device is composed of a refrigeration cycle device 1, a usage-side heat medium circuit 5, and a control device 4 which controls operational action of the liquid heating device.

The refrigeration cycle device 1 is composed of a main refrigerant circuit 2 and a bypass refrigerant circuit 3.

The main refrigerant circuit 2 is formed by sequentially connecting, through a pipe 16, a compression mechanism 21, a usage-side heat exchanger 22 which is a radiator, an intermediate heat exchanger 26 which is a cooling heat exchanger, a first expansion device 23 and a heat source-side heat exchanger 24 which is an evaporator . Carbon dioxide (CO2) is used as refrigerant.

It is most suitable to use the carbon dioxide as the refrigerant, but it is also possible to use non-azeotropic refrigerant mixture such as R407, pseudoazeotropic refrigerant mixture such as R410A, and single refrigerant such as R32.

The compression mechanism 21 which compresses refrigerant is composed of a low stage-side compression rotation elements 21a and a high stage-side compression rotation elements 21b. The usage-side heat exchanger 22 heats the usage-side heat medium by refrigerant which is discharged from the high stage-side compression rotation elements 21b. A volume ratio between the low stage-side compression rotation element 21a and the high stage-side compression rotation element 21b constituting the compression mechanism 21 is constant, a driving shaft (not shown) is commonly used, and the liquid heating device is composed of one compressor placed in one container.

Although this embodiment is described using the compression mechanism 21 in which the compression rotation element is composed of the low stage-side compression rotation elements 21a and the high stage-side compression rotation elements 21b, the present invention can also be applied to a single compression rotation element. When the single compression rotation element is used, a position where refrigerant from the bypass refrigerant circuit 3 joins up is defined as a middle stage location of the compression rotation element, a compression rotation element up to the position where the refrigerant from the bypass refrigerant circuit 3 joins up is defined as the low stage-side compression rotation elements 21a, and a compression rotation element after the former position where the refrigerant from the bypass refrigerant circuit 3 joins up is defined as the high stage-side compression rotation elements 21b.

The compression mechanism 21 may be composed of the low stage-side compression rotation elements 21a and the high stage-side compression rotation elements 21b each of which is composed of two independent compressors.

The bypass refrigerant circuit 3 branches off from the pipe 16 between the usage-side heat exchanger 22 and the first expansion device 23, and is connected to the pipe 16 between the low stage-side compression rotation elements 21a and the high stage-side compression rotation elements 21b.

The bypass refrigerant circuit 3 is provided with a second expansion device 31. A portion of high pressure refrigerant after it passes through the usage-side heat exchanger 22 or a portion of high pressure refrigerant after it passes through the intermediate heat exchanger 26 is decompressed by the second expansion device 31 and becomes intermediate pressure refrigerant. Thereafter, the intermediate pressure refrigerant exchanges heat with high pressure refrigerant which flows through the main refrigerant circuit 2 in the intermediate heat exchanger 26, and joins up with refrigerant between the low stage-side compression rotation elements 21a and the high stage-side compression rotation elements 21b.

An accumulator 25 which separates gas and liquid from each other is provided between an outlet side of the heat source-side heat exchanger 24 and a suction side of the compression mechanism 21. The main refrigerant circuit 2 is provided with a four-way valve 27 which switches between a flow path for flowing high pressure refrigerant discharged from the compression mechanism 21 toward the usage-side heat exchanger 22 and a flow path for flowing the high pressure refrigerant toward the heat source-side heat exchanger 24.

In the usage-side heat medium circuit 5, a heat medium backward pipe 53 and a heat medium forward pipe 54 are connected to the usage-side heat exchanger 22. The heat medium backward pipe 53 is provided with a conveying device 55 which is a conveying pump. If the conveying device 55 is operated, usage-side heat medium is supplied to the usage-side heat exchanger 22 through the heat medium backward pipe 53, the usage-side heat medium heated by the usage-side heat exchanger 22 is supplied from the heat medium forward pipe 54 to a heater (not shown) such as a floor heater and a hot water storage tank (not shown).

According to this, a room is heated or hot water is supplied. Thereafter, the usage-side heat medium again returns to the usage-side heat exchanger 22 through heat medium backward pipe 53. Water or antifreeze liquid is used as the usage-side heat medium.

The pipe 16 which connects a downstream side of the first expansion device 23 and a suction side of the compression mechanism 21 becomes a low pressure side circuit of the main refrigerant circuit 2, the pipe 16 of this low pressure side circuit is provided with a pressure sensor 51 which detects evaporating pressure of the low pressure side circuit as a low pressure side detector.

As the low pressure side detector, it is also possible to use an evaporating temperature thermistor (not shown) which is provided on the pipe 16 of the low pressure side circuit of the main refrigerant circuit 2 and which detects evaporating temperature of refrigerant in a gas-liquid two layer state flowing through the low pressure side circuit.

A temperature thermistor 28 is provided around the heat source-side heat exchanger 24. If a fan 29 is driven, the temperature thermistor 28 detects temperature of air which supplies heat to the heat source-side heat exchanger 24.

The refrigeration cycle device 1 in the embodiment includes a heating operation mode and a defrosting operation mode.

In the heating operation mode, refrigerant discharged from the high stage-side compression rotation element 21b of the compression mechanism 21 heats usage-side heat medium which circulates through the usage-side heat exchanger 22. In the usage-side heat medium circuit 5, the conveying device 55 is operated to circulate the usage-side heat medium through the usage-side heat exchanger 22. In the defrosting operation mode, the heat source-side heat exchanger 24 defrosts by refrigerant discharged from the high stage-side compression rotation element 21b of the compression mechanism 21.

When detected pressure detected by the pressure sensor 51 or detected temperature detected by the evaporating temperature thermistor becomes equal to or lower than a predetermined value, or when temperature, detected by the temperature thermistor 28, of air which supplies heat to the heat source-side heat exchanger 24 is equal to or lower than a predetermined value and in this state, when execution time of the heating operation mode continues for predetermined time or longer, the control device 4 determines that the heat source-side heat exchanger 24 is frosted, and executes the defrosting operation mode.

In the defrosting operation mode, frost formed on the heat source-side heat exchanger 24 is melted and removed by heat of refrigerant discharged from the high stage-side compression rotation element 21b of the compression mechanism 21.

During execution of the heating operation mode, if it is determined that frost is formed on the heat source-side heat exchanger 24, the defrosting operation mode is executed and after the execution of the defrosting operation mode is completed, the heating operation mode is again executed.

In Fig. 1, solid arrows show a flowing direction of refrigerant when the normal heating operation mode is executed. Variation in a state of refrigerant when the normal heating operation mode is executed will be described below.

High pressure refrigerant discharged from the compression mechanism 21 flows into the usage-side heat exchanger 22 through the four-way valve 27, and radiates heat to usage-side heat medium which passes through the usage-side heat exchanger 22. The high pressure refrigerant which flows out from the usage-side heat exchanger 22 is distributed toward the intermediate heat exchanger 26 and toward the second expansion device 31. The high pressure refrigerant which flows into the intermediate heat exchanger 26 is cooled by intermediate pressure refrigerant which is decompressed by the second expansion device 31.

The high pressure refrigerant distributed toward the first expansion device 23 is decompressed and expanded by the first expansion device 23, and then flows into the heat source-side heat exchanger 24. Low pressure refrigerant which flows into the heat source-side heat exchanger 24 absorbs heat from air in the heat source-side heat exchanger 24.

The high pressure refrigerant distributed toward the second expansion device 31 is decompressed and expanded by the second expansion device 31, and then flows into the intermediate heat exchanger 26. The intermediate pressure refrigerant which flows into the intermediate heat exchanger 26 is heated by high pressure refrigerant which flows out from the usage-side heat exchanger 22. Thereafter, the intermediate pressure refrigerant which flows out from the intermediate heat exchanger 26 joins up with intermediate pressure refrigerant which is discharged from the low stage-side compression rotation element 21a of the compression mechanism 21, and sucked into the high stage-side compression rotation element 21b.

According to a configuration of the refrigeration cycle device 1 of the embodiment, a portion of high pressure refrigerant bypasses the intermediate heat exchanger 26 at the time of the heating operation. According to this, compression power of the low stage-side compression rotation element 21a is reduced, and enthalpy of the sucked refrigerant of the high stage-side compression rotation element 21b of the compression mechanism 21 is reduced. Thus, density of refrigerant is increased, a flow rate of refrigerant flowing through the usage-side heat exchanger 22 is increased, and heating ability or coefficient of performance is enhanced.

However, if such a heating operation mode is executed, moisture in air is frozen and frost is formed on the heat source-side heat exchanger 24, heat-transfer performance of the heat source-side heat exchanger 24 is deteriorated and this lowers the heating ability and coefficient of performance.

Therefore, when detected pressure detected by the pressure sensor 51 or detected temperature detected by the evaporating temperature thermistor becomes equal to or lower than the predetermined value, or when temperature, detected by the temperature thermistor 28, of air which supplies heat to the heat source-side heat exchanger 24 is equal to or lower than the predetermined value and in this state, when execution time of the heating operation mode continues for predetermined time or longer, it is determined that frost is formed on the heat source-side heat exchanger 24, and it is necessary to execute the defrosting operation mode for melting and removing frost formed on the heat source-side heat exchanger 24 by heat of refrigerant discharged from the high stage-side compression rotation element 21b of the compression mechanism 21.

As a typical type of the defrosting operation mode, there is a reverse cycle defrosting type. According to this, flow paths with which the four-way valve 27 is brought into communication are switched at the time of the heating operation mode, a circulation direction of the refrigerant is reversed, high temperature and high pressure refrigerant discharged from the compression mechanism 21 is made to flow into the heat source-side heat exchanger 24, and frost on the heat source-side heat exchanger 24 is melted by its condensation heat.

On the other hand, there is also a hot gas defrosting type. According to this, the four-way valve 27 is not switched, the flow path with which the four-way valve 27 is brought into communication is the same as that when the heating operation mode is executed, high temperature and high pressure refrigerant discharged from the compression mechanism 21 is made to flow into the usage-side heat exchanger 22 and the refrigerant is made to flow through the first expansion device 23, an opening degree of the first expansion device 23 is increased, high temperature and high pressure gas refrigerant discharged from the compression mechanism 21 is made to pass through the first expansion device 23 without decompressing the gas refrigerant and thereafter, the gas refrigerant is made to flow into the heat source-side heat exchanger 24, and frost on the heat source-side heat exchanger 24 is melted.

In this embodiment, the defrosting operation mode is executed using the hog gas defrosting type. Variation in a state of the refrigerant in this case will be described using Fig. 1.

Arrows shown by broken lines show a flowing direction of refrigerant when the defrosting operation mode is executed using the hot gas defrosting type.

High pressure refrigerant discharged from the compression mechanism 21 flows into the usage-side heat exchanger 22 through the four-way valve 27, refrigerant which flows out from the usage-side heat exchanger 22 passes through the first expansion device 23 and thereafter, the refrigerant flows into the heat source-side heat exchanger 24, and heat is radiated to the accumulated frost to melt the frost. Gas-liquid two layer state which radiates heat in the heat source-side heat exchanger 24 and which flows out enters the accumulator 25, the refrigerant is separated from liquid and gas refrigerant again returns to the compression mechanism 21.

In this case, also during execution of the defrosting operation mode, since high temperature discharged refrigerant flows into the usage-side heat exchanger 22, temperature drop of the usage-side heat exchanger 22 is suppressed, and enhancement of the heating ability in the heating operation mode which is started after the defrosting operation mode is executed becomes faster than that of the inverse cycle defrosting operation.

To enhance the defrosting efficiency, circulation of usage-side heat medium which flows through the usage-side heat exchanger 22 is stopped, that is, operational action of the conveying device 55 is stopped, or the operation rotation number of the conveying device 55 is reduced, a flow rate of usage-side heat medium flowing through the usage-side heat exchanger 22 is reduced, and a heat amount which radiates heat to the usage-side heat medium is reduced. To suppress the temperature drop of refrigerant which flows into the heat source-side heat exchanger 24, the opening degree of the first expansion device 23 is substantially fully opened, and the decompression amount is made small and the device is operated.

In this embodiment, when the refrigeration cycle device 1 executes the defrosting operation mode, the control device 4 adjusts the valve opening degrees of the first expansion device 23 and the second expansion device 31 such that a flow rate of refrigerant flowing through the side of the first expansion device 23 becomes greater than a flow rate of refrigerant flowing through the side of the second expansion device 31.

As described above, in this embodiment, the control device 4 appropriately adjusts a flow rate ratio between the flow rate of refrigerant flowing on the side of the first expansion device 23 and the flow rate of refrigerant flowing on the side of the second expansion device 31, that is, the control device 4 substantially fully opens the valve opening degree of the first expansion device 23 and substantially fully close the valve opening degree of the second expansion device 31.

As shown in Fig. 1, high temperature and high pressure refrigerant discharged from the compression mechanism 21, i.e., from the high stage-side compression rotation element 21b is made to flow into the usage-side heat exchanger 22, the refrigerant flows through the first expansion device 23, the opening degree of the first expansion device 23 is increased (fully opened), high temperature and high pressure gas refrigerant discharged from the compression mechanism 21 is made to pass through the first expansion device 23 without decompressing the gas refrigerant and thereafter, the gas refrigerant is made to flow into the heat source-side heat exchanger 24 to melt frost on the heat source-side heat exchanger 24.

According to this, during execution of the defrosting operation mode, since the flow rate of refrigerant flowing through the first expansion device 23 is larger than the flow rate of refrigerant flowing through the second expansion device 31, refrigerant which passes through the usage-side heat exchanger 22 is not brought into a low temperature and low pressure state. Therefore, temperature drop of the usage-side heat exchanger 22 can be suppressed and as a result, heating ability can swiftly be enhanced.

Further, during execution of the defrosting operation mode, since the flow rate of refrigerant flowing through the first expansion device 23 is larger than the flow rate of refrigerant flowing through the second expansion device 31, the amount of refrigerant which passes through the usage-side heat exchanger 22 is also increased. Therefore, heat possessed by the usage-side heat medium which is stored in the usage-side heat exchanger 22 can also be utilized for defrosting the heat source-side heat exchanger 24 and therefore, it is possible to enhance the defrosting ability in the defrosting operation mode.

The control device 4 operates the first expansion device 23 faster than the second expansion device 31, and sets the opening degree such that the flow rate of refrigerant flowing through the first expansion device 23 becomes larger than the flow rate of refrigerant flowing through the second expansion device 31.

According to this, a difference between high pressure and low pressure of refrigerant of the main refrigerant circuit 2 can be made small swiftly. It is possible to swiftly increase the flow rate of refrigerant discharged from the compression mechanism 21, i.e., from the high stage-side compression rotation element 21b which can be supplied to the heat source-side heat exchanger 24 in the defrosting operation mode.

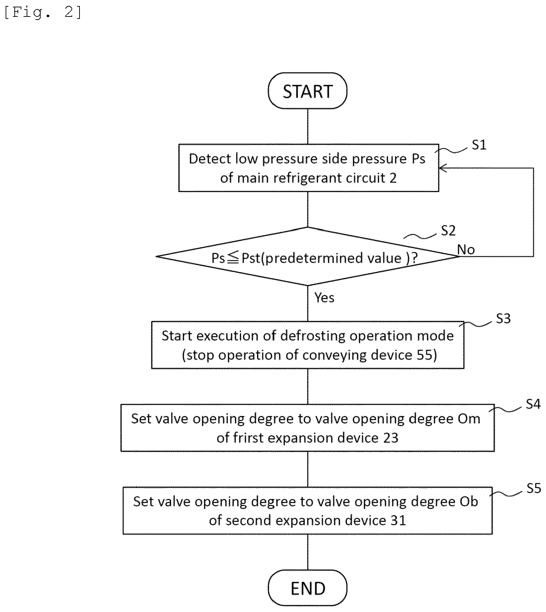

Operations of valve opening degrees of the first expansion device 23 and the second expansion device 31 in the defrosting operation mode will be described based on the flowchart shown in Fig. 2. The defrosting operation mode is executed when it is determined that frost is formed on the heat source-side heat exchanger 24 during execution of the heating operation mode.

First, during execution of the heating operation mode, the control device 4 detects low pressure side pressure Ps of the main refrigerant circuit 2 by the pressure sensor 51 which is a low pressure side detector (step S1).

Then, the pressure sensor 51 detects the low pressure side pressure Ps of the main refrigerant circuit 2, i.e., suction pressure (suction pressure of low stage-side compression rotation element 21a) of the compression mechanism 21, and it is determined whether the detected value is equal to or lower than a preset predetermined value (predetermined pressure Pst) while monitoring its state (step S2).

When NO in step S2, that is, when the pressure Ps is equal to or higher than Pst, the control device 4 detects the low pressure side pressure Ps of the main refrigerant circuit 2 by the pressure sensor 51 which is the low pressure side detector while keeping the execution of the heating operation mode.

On the other hand, when YES in step S2, that is, when the suction pressure Ps is equal to or lower than Pst which is the predetermined value, the control device 4 stops the operation of the conveying device 55, that is, the control device 4 stops execution of the heating operation mode in a state where the compression mechanism 21 is continuously operating, and the control device 4 starts execution of the defrosting operation mode (step S3) .

The valve opening degree of the first expansion device 23 is set to Om which is preset in the control device 4 (step S4).

Thereafter, the valve opening degree of the second expansion device 31 is set to Ob which is preset in the control device 4 (step S5).

As shown in Fig. 1, the valve opening degree Om of the first expansion device 23 and the valve opening degree Ob of the second expansion device 31 are such opening degrees that a flow rate Gm of refrigerant flowing through the first expansion device 23 becomes larger than a flow rate Gb of refrigerant flowing through the second expansion device 31. That is, the flow rate Gm of refrigerant flowing through the first expansion device 23 is set larger than the flow rate Gb of refrigerant flowing through the second expansion device 31.

More specifically, during execution of the defrosting operation mode, the valve opening degree Om of the first expansion device 23 is set to substantially the maximum opening degree and the valve opening degree Ob of the second expansion device 31 is set to substantially the minimum opening degree, and high temperature and high pressure gas refrigerant discharged from the compression mechanism 21 is made to flow into the heat source-side heat exchanger 24.

Therefore, when execution of the defrosting operation mode is started, the control device 4 operates the valve opening degree of the first expansion device 23 in its opening direction and operates the valve opening degree of the second expansion device 31 in its closing direction.

Alternatively, immediately after the valve opening degree of the first expansion device 23 and the valve opening degree of the second expansion device 31 are set to Om and Ob which are preset in the control device 4, the operation of the conveying device 55 may be stopped and execution of the defrosting operation mode may be started.

If detected pressure detected by the pressure sensor 51 or detected temperature detected by the evaporating temperature thermistor becomes higher than the predetermined value, or even when temperature of air which supplies heat to the heat source-side heat exchanger 24 detected by the temperature thermistor 28 is equal to or lower than the predetermined value, if execution time of the defrosting operation mode in this state continued for more than predetermined time, the defrosting operation mode which melts and removes frost formed on the heat source-side heat exchanger 24 is released, and the control device 4 again operates the conveying device 55 and starts executing the heating operation mode.

As the low pressure side detector, it is possible to use an evaporating temperature thermistor (not shown) which is provided in the low pressure side pipe 16 of the main refrigerant circuit 2 connecting a downstream side of the first expansion device 23 of the main refrigerant circuit 2 and a suction side of the compression mechanism 21 to each other, and which detects evaporating temperature of low pressure side refrigerant in the gas-liquid two state.

In this case, like the flowchart shown in Fig. 2 using the pressure sensor 51, during a period when a detected value detected by the evaporating temperature thermistor is equal to or lower than the predetermined value, the valve opening degree of the first expansion device 23 and the valve opening degree of the second expansion device 31 are set to such an opening degree that the flow rate of refrigerant flowing through the first expansion device 23 becomes larger than the flow rate of refrigerant flowing through the second expansion device 31.

The heat exchanger temperature thermistor 28 is provided around the heat source-side heat exchanger 24, and if the fan 29 is driven, temperature of air which supplies heat to the heat source-side heat exchanger 24 is detected using the temperature thermistor 28.

Using the temperature thermistor 28 instead of the low pressure side detector, during predetermined time from start of execution of the defrosting operation mode to termination of the execution,the control device 4 may set the valve opening degree of the first expansion device 23 and the valve opening degree of the second expansion device 31 to such an opening degree that the flow rate of refrigerant flowing through the first expansion device 23 becomes larger than the flow rate of refrigerant flowing through the second expansion device 31.

In this case, after predetermined time is elapsed after the execution of the defrosting operation mode is started, operation is shifted to operation control of the valve opening degree of the first expansion device 23 and the valve opening degree of the second expansion device 31 in the normal heating operation mode, and execution of the heating operation mode is continued.

This embodiment has been described based on such a configuration that the valve opening degree Om of the first expansion device 23 and the valve opening degree Ob of the second expansion device 31 are preset in the control device 4, but the valve opening degree Om and the valve opening degree Ob may be controlled such that flow rates are actually detected and the flow rates are set such that the flow rate Gm of the main refrigerant becomes larger than the flow rate Gb of the bypass refrigerant.

As a flow rate detecting device (not shown) in this case, flowmeters may be respectively provided in a refrigerant circuit and a bypass path on the side of the first expansion device 23, and flow rates of the respective refrigerants may be calculated from a function of opening degrees and a pressure difference between an outlet and an inlet of the respective expansion valves.

It is not absolutely necessary that the bypass refrigerant circuit 3 branches off from, the main refrigerant circuit 2 between the usage-side heat exchanger 22 and the intermediate heat exchanger 26, and the bypass refrigerant circuit 3 may branch off from the main refrigerant circuit 2 between the intermediate heat exchanger 26 and the first expansion device 23.

It is not absolutely necessary that the first expansion device 23 and the second expansion device 31 in this embodiment are the expansion valves, and they may be expansion devices which recover power from expanding refrigerant. In this case, the number of rotations of the expansion device may be controlled by varying a load by a dynamo which is connected to the expansion device for example.

### [INDUSTRIAL APPLICABILITY]

As described above, the refrigeration cycle device of the present invention includes the main refrigerant circuit having the intermediate heat exchanger and the bypass refrigerant circuit. Since the refrigeration cycle device can suppress the deterioration of the heating ability of the heating operation even when the heating operation is executed after the execution of the defrosting operation of the heat source-side heat exchanger is completed, the refrigeration cycle device is effective for freezing, for air conditioning, for supplying hot water and for heating a room.

### [EXPLANATION OF SYMBOLS]

- 1: refrigeration cycle device
- 2: main refrigerant circuit
- 3: bypass refrigerant circuit
- 4: control device
- 5: usage-side heat medium circuit
- 16: pipe
- 21: compression mechanism
- 21a: low stage-side compression rotation element
- 21b: high stage-side compression rotation element
- 22: usage-side heat exchanger
- 23: first expansion device
- 24: heat source-side heat exchanger
- 25: accumulator
- 26: intermediate heat exchanger
- 28: temperature thermistor
- 29: fan
- 31: second expansion device
- 51: pressure sensor (low pressure side detector)
- 53: heat medium backward pipe
- 54: heat medium forward pipe
- 55: conveying device

## Claims

1. A refrigeration cycle device comprising:
a main refrigerant circuit formed by sequentially connecting, through a pipe, a compression mechanism composed of a compression rotation element, a usage-side heat exchanger for heating usage-side heat medium by refrigerant discharged from the compression rotation element, an intermediate heat exchanger, a first expansion device, and a heat source-side heat exchanger;
a bypass refrigerant circuit branches off from the pipe between the usage-side heat exchanger and the first expansion device, in which branched refrigerant is decompressed by a second expansion device and thereafter, heat of the refrigerant is exchanged with that of the refrigerant flowing through the main refrigerant circuit by the intermediate heat exchanger, and the refrigerant joins up with the refrigerant which is in middle of a compression operation of the compression rotation element; and
a control device, wherein
the refrigeration cycle device includes
a heating operation mode for heating the usage-side heat medium in the usage-side heat exchanger by the refrigerant discharged from the compression rotation element, and
a defrosting operation mode for defrosting the heat source-side heat exchanger by the refrigerant discharged from the compression rotation element,
the control device adjusts an opening degree of the first expansion device and an opening degree of the second expansion device, and
while the defrosting operation mode is executed,
a flow rate of refrigerant flowing through the first expansion device is made larger than a flow rate of refrigerant flowing through the second expansion device.

2. The refrigeration cycle device according to claim 1, wherein the control device makes the first expansion device operate faster than the second expansion device, and the control device sets the opening degrees of the expansion devices to such values that the flow rate of the refrigerant flowing through the first expansion device becomes larger than the flow rate of the refrigerant flowing through the second expansion device.

3. The refrigeration cycle device according to claim 1 or 2, wherein in the defrosting operation mode, the refrigerant discharged from the compression rotation element flows through the usage-side heat exchanger, the first expansion device and the heat source-side heat exchanger in this order.

4. The refrigeration cycle device according to any one of claims 1 to 3, wherein carbon dioxide is used as the refrigerant.

5. A liquid heating device including the refrigeration cycle device according to any one of claims 1 to 4, and a usage-side heat medium circuit through which the usage-side heat medium circulates by a conveying device.
